# EUROPÄISCHE PATENTSCHRIFT

(11) **EP 2 352 655 B1**
(45) Veröffentlichungstag und Bekanntmachung des Hinweises auf die Patenterteilung: **25.02.2015**
(21) Anmeldenummer: 09777600.9
(22) Anmeldetag: 01.08.2009
(51) Int. Cl.: B60D 1/62, B60D 1/64

(54) **ANSCHLUSSANORDNUNG FÜR EIN ANHÄNGEFAHRZEUG, SOWIE ANHÄNGEFAHRZEUG**
CONNECTION ARRANGEMENT FOR A TRAILER VEHICLE AND TRAILER VEHICLE
AGENCEMENT DE RACCORDS POUR UN VÉHICULE TRACTÉ ET VÉHICULE TRACTÉ

(30) Priorität: 03.11.2008 DE 102008054364
(43) Veröffentlichungstag der Anmeldung: 10.08.2011
(73) Patentinhaber: WABCO GmbH, 30453 Hannover (DE)
(72) Erfinder: RISSE, Rainer, 30982 Pattensen (DE); RONNENBERG, Udo, 30900 Wedemark (DE); STENDER, Axel, 31787 Hamein (DE)
(74) Vertreter: Koschnitzki, Thomas
(86) Internationale Anmeldenummer: PCT/EP2009/005591
(87) Internationale Veröffentlichungsnummer: WO 2010/060494

(56) Entgegenhaltungen:
- WO-A1-2005/102744
- WO-A1-2006/032355
- WO-A1-2006/066819
- WO-A1-2008/038313
- FR-A- 1 236 432
- GB-A- 2 204 844
- US-A- 5 458 357

## Beschreibung

Die Erfindung betrifft eine Anschlussanordnung für ein Anhängefahrzeug, sowie ein Anhängefahrzeug, das eine derartige Anschlussanordnung aufweist.

Anhängefahrzeuge sind allgemein bekannt. Anhängefahrzeuge werden insbesondere für Lastkraftwagen verwendet, beispielsweise als Auflieger im Rahmen eines Sattelzuges oder als Anhänger. Dabei weisen Anhängefahrzeuge für Lastkraftwagen eine Vielzahl von anhängerseitigen Komponenten auf, beispielsweise eine Beleuchtungsanlage oder ein Bremssystem. Um solche Komponenten von einem Zugfahrzeug zu steuern und mit Druckluft und Strom zu versorgen, ist es bekannt, das Anhängefahrzeug mit einer Anschlussanordnung zu versehen. Eine Anschlussanordnung umfasst üblicherweise mehrere für einen zugfahrzeugseitigen Anschluss geeignete Anschlüsse, sowie mehrere Leitungen zum Verbinden der Anschlüsse mit den anhängerseitigen Komponenten. Dabei weist ein Anhängefahrzeug für ein Lastkraftwagen üblicherweise folgende Anschlüsse auf: a) einen ersten elektrischen Anschuss für ein Bremssystem, b) einen zweiten elektrischen Anschluss für ein Beleuchtungsanlage, c) einen ersten pneumatischen Anschluss für eine Bremsleitung, d) einen zweiten pneumatischen Anschluss für eine Vorratsleitung, wobei Bremsleitung und Vorratsleitung dem Bremssystem zugeordnet sind.

Die Anschlüsse sind in der Regel an der Stirnseite des Anhängefahrzeuges angeordnet, um eine einfache Verbindung mit dem Zugfahrzeug herstellen zu können. Um ein Anhängefahrzeug mit einer solchen Anschlussanordnung auszustatten, ist es üblich, die Anschlüsse zunächst an einem zum

Anhängefahrzeug gehörenden Unterbau zu montieren. Anschließend werden die Leitungen einzeln von einem Anschluss zur jeweiligen anhängerseitigen Komponente, der der Anschluss zugeordnet ist verlegt.

Solch ein gattungsgemäße Anschlußanordnung ist in Dokument WO 2008/038313 A1 offenbart.

Aufgabe der vorliegenden Erfindung ist es, eine Anschlussanordnung für ein Anhängefahrzeug zu schaffen, die mit einem vergleichsweise geringen Montageaufwand an einem Anhängefahrzeug montierbar ist. Eine weitere Aufgabe der Erfindung ist es, ein Anhängefahrzeug zu schaffen, dass solch eine Anschlussanordnung aufweist.

Diese Aufgaben werden erfindungsgemäß durch einen Anschlussanordnung gemäß Anspruch 1 und ein Anhängefahrzeug nach Anspruch 13 gelöst.

Vorteilhafte Weiterbildungen sind Gegenstände der abhängigen Ansprüche.

Durch die Zusammenfassungen von Leitungen zu einem gemeinsamen Kabelstrang kann der Montageaufwand zum Verlegen der Leitungen gegenüber dem getrennten Verlegen der Leitungen reduziert werden. Insbesondere können die Leitungen schon vor einer Montage der Anschlussanordnung an einem Anhängefahrzeug zumindest streckenweise zu einem gemeinsamen Kabelstrang zusammengefasst sein, was zusätzlich den Montageaufwand senkt.

Die Leitungen können beispielsweise durch Kabel, Rohre oder Schläuche gebildet sein, je nach dem, welches Medium übertragen werden soll. Insbesondere kann eine Leitung mehrere Einzelleitungen umfassen. Beispielsweise kann die Leitung, die den ersten elektrischen Anschluss mit einem anhängerseitigen Bremssystem verbindet, mehrere Einzelleitungen für die Stromversorgung und für eine Datenübertragung aufweisen.

Vorzugsweise erstreckt sich der Kabelstrang beginnend von der Stirnseite des Anhängefahrzeuges bis zumindest in die hintere Anhängerfahrzeughälfte, vorzugsweise bis in den Heckbereich des Anhängers.

Die Leitungen werden vorzugsweise mittels mindestens eines Haltemittels, beispielsweise ein Kabelbinder, eine Schelle oder eine Umhüllung, wie ein Schlauch, oder alternativ stoffschlüssig mittels eines Klebemittels, beispielsweise durch ein Umspritzen mit Kunststoff, zu einem Kabelstrang zusammengefasst. Umfasst die Anschlussanordnung zusätzlich ein Gehäuse an dem mindestens zwei Anschlüsse angeordnet sind und/oder von dem Gehäuse zumindest teilweise ausgebildet werden, so können die den Anschlüssen zugeordneten Leitungen schon innerhalb des Gehäuses zu einem gemeinsamen Kabelstrang zusammengefasst werden.

Die Erfindung wird im Folgenden anhand von Ausführungsbeispielen, die durch mehrere Figuren schematisch dargestellt sind, näher beschrieben. Dabei zeigt:
- Fig. 1: eine erste Ausführungsform eines erfindungsgemäßen Anhängefahrzeugs, dass eine erste Ausführungsform einer erfindungsgemäßen Anschlussanordnung umfasst,
- Fig. 2: die Anschlussanordnung gemäß der ersten Ausführungsform in Alleinstellung,
- Fig. 3: eine zweite Ausführungsform einer erfindungsgemäßen Anschlussanordnung,
- Fig. 4: einen Ausschnitt eines Kabelstranges,
- Fig. 5: eine zweite Ausführungsform eines erfindungsgemäßen Anhängefahrzeuges, und
- Fig. 6: eine dritte Ausführungsform eines erfindungsgemäßen Anhängefahrzeuges mit einer vierten Ausführungsform einer Anschlussanordnung.

Gleiche oder einander entsprechende Bauteile sind in den Figuren mit denselben Bezugszeichen versehen.

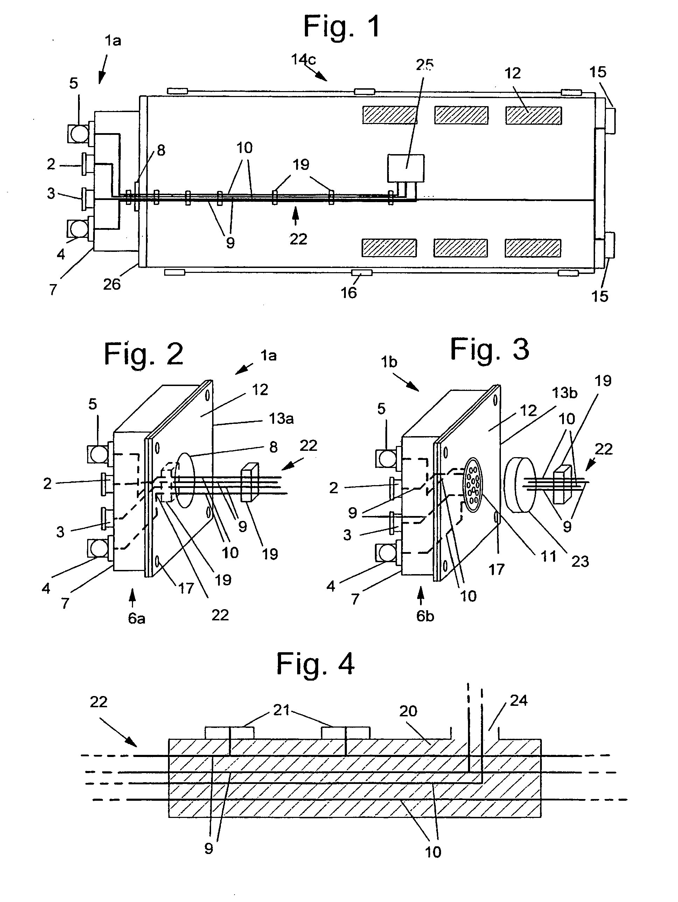

Die Figur 1 zeigt eine erste Ausführungsform eines Anhängefahrzeuges 14a, welches eine erste Ausführungsform einer Anschlussanordnung 1 a umfasst. Die Anschlussanordnung 1 a ist in Alleinstellung in Fig. 2 gezeigt.

Die Anschlussanordnung 1 a umfasst vier Anschlüsse 2, 3, 4, 5, die für einen zugfahrzeugseitigen Anschluss von Komponenten des Anhängers, hier ein elektronisches Bremssystem 25 und eine Beleuchtungsanlage mit Rücklichtern 15 und Seitenlichtern 16, vorgesehen sind. Von den vier Anschlüssen 2, 3, 4, 5 ist ein erster elektrischer Anschluss 2 für das Bremssystem 25, ein zweiter elektrischer Anschluss 3 für die Beleuchtungsanlage, ein erster pneumatischer Anschluss 4 für eine Bremsleitung und ein zweiter pneumatischer Anschluss 5 für eine Vorratsleitung, wobei Bremsleitung und Vorratsleitung dem Bremssystem 25 zugeordnet sind vorgesehen und entsprechend geeignet, ausgebildet.

Die Anschlüsse 2, 3, 4, 5 sind an einer zugfahrzeugseitigen Vorderseite 7 eines kastenförmigen Gehäuses 6a angeordnet. Das Gehäuse 6a ist hier aus Kunststoff hergestellt. Optional wäre auch ein Gehäuse aus einem Metall, beispielsweise einem Blech, möglich. Das Gehäuse 6a ist auf seiner Rückseite 12 mit einem Gehäusedeckel 13a abgeschlossen. Die Anschlüsse 2, 3, die hier als Steckdosen gemäß den Normen ISO 12098 und ISO 763813 Kupplungsköpfe 4, 5 ausgebildet sind, sind zumindest teilweise von dem Gehäuse 6a ausgebildet bzw. sind an vom Gehäuse 6a ausgebildeten Befestigungsmitteln befestigt. In diesem Falle sind Steckdosengehäuse der elektrischen Anschlüsse 2, 3 an dem Gehäuse 6a angespritzt. Des Weiteren sind an dem Gehäuse 6a Gewindezapfen angeformt, auf denen die Kupplungsköpfe 4, 5 aufgeschraubt sind (in den Figuren nicht dargestellt).

Von den pneumatischen Anschlüssen 4, 5 führt jeweils eine Leitung 10 zu dem elektronischen Bremssystem 25. Des Weiteren führt eine Leitung 9 von dem ersten elektrischen Anschluss 2 ebenfalls zum elektronischen Bremssystem 25. Das elektronische Bremssystem 25 ist an sich bekannt und in der Fig. 1 lediglich symbolhaft dargestellt. Das elektronische Bremssystem 25 kann insbesondere mehrere Komponenten aufweisen, die wiederum unter sich über Kabel und/oder sonstige Leitungen verbunden sein können. Von dem zweiten elektrischen Anschluss 5 führt eine weitere Leitung 9 zu einer Beleuchtungsanlage, in diesem Falle zu Rücklichtern 15 und Seitenlichtern 16 des Anhängefahrzeuges. Die Leitungen 10 sind für die Übertragung von Druckluft, die Leitungen 9 für die Übertragung von Strom und Datensignalen ausgebildet.

Die Leitungen 9, 10 sind im Inneren des Gehäuses 6a rückseitig mit den zugeordneten Anschlüssen 2, 3, 4, 5 verbunden. Die Leitungen 9, 10 werden über eine Durchführung 8 aus dem Gehäuse 6a herausgeführt. Die Durchführung 8 ist dabei derart ausgebildet, dass das Gehäuseinnere des Gehäuses 6a nach außen hin abgedichtet ist, insbesondere gegenüber einem Eindringen von Feuchtigkeit. Alternativ können mehrere Durchführungen 8 vorgesehen sein, um die Leitungen 9, 10 aus dem Gehäuse 6a herauszuführen.

Die Leitungen 9, 10 sind beginnend innerhalb des Inneren des Gehäuses 6a bis in die hintere Hälfte des Anhängefahrzeuges 14a zu einem gemeinsamen Kabelstrang 22 zusammengefasst. Die Zusammenfassung erfolgt mit mehreren Haltemitteln 19, hier Kabelbindern. Optional wären beispielsweise auch Schellen oder Umhüllungen, wie Schläuche, möglich. Ein Haltemittel 19 ist hierbei im Inneren des Gehäuses 6a angeordnet. In der zweiten Anhängefahrzeughälfte trennt sich der Kabelstrang 22 auf, die Leitungen 9, 10 verlaufen getrennt zum Bremssystem 25 und zur Beleuchtungsanlage.

Für die Montage einer solchen Anschlussanordnung 1 a sind an der Rückseite des Gehäuses 6a mehrere Bohrungen 17 vorgesehen, über die das Gehäuse 6a beispielsweise mit einem stirnseitigen Träger 26 eines Unterbaus des Anhängefahrzeuges 14a mittels Schraubverbindungen befestigt werden kann. Das Zusammenfassen der Leitungen 9, 10 zu einem Kabelstrang 22 erfolgt hier vor dem eigentlichen Montieren der Anschlussanordnung 1 a an dem Anhängefahrzeug 14a. Alternativ können die Leitungen 9, 10 auch im Rahmen der Montage der Anschlussanordnung 1 a an dem Anhängefahrzeug 14a zu einem Kabelstrang 22 zusammengefasst werden.

Die Fig. 3 zeigt eine zweite Ausführungsform einer erfindungsgemäßen Anschlussanordnung 1 b. Die zweite Anschlussanordnung 1 b entspricht im Wesentlichen der ersten Anschlussanordnung 1 a, weswegen im Folgenden lediglich auf die Unterschiede eingegangen wird.

Anstatt einer Durchführung 8 weist die zweite Anschlussanordnung 1 b einen Ausgangsanschluss 11 auf, der an einem rückseitigen Gehäusedeckel 13b eines ansonsten dem Gehäuse 6a entsprechenden Gehäuse 6b angeordnet ist. Alternativ ist es beispielsweise auch möglich, mehrere Ausgangsanschlüsse 11 vorzusehen. Der Ausgangsanschluss 11 ist hier als Steckdose ausgebildet, wobei das Steckdosengehäuse des Ausgangsanschlusses 11 an dem Gehäusedeckel 13 angeformt ist. Die von der Rückseite der Anschlüsse 2, 3, 4, 5 im Inneren des Gehäuses 6b angehenden Leitungen 9, 10 sind auf den Ausgangsanschluss 11 geführt. Ein Kabelstrang im Inneren des Gehäuses 6b wird nicht gebildet. Die Anschlussanordnung 1 b umfasst ein Anschlussmittel 23, hier einen Stecker 23, der mit dem Ausgangsanschluss 11 verbindbar ist. Von dem Anschlussmittel 23 werden die Leitungen 9, 10 weitergeführt zu dem Bremssystem 25 und zur Beleuchtungsanlage entsprechend der ersten Ausführungsform 1 b. Dabei sind entsprechend der ersten Ausführungsform 1 a mehrere Haltemittel 19 vorgesehen, die die Leitungen 9, 10 kurz hinter dem Anschlussmittel 23 beginnend zu einem Kabelstrang 22 zusammenfassen.

Die zweite Anschlussanordnung 1 b ermöglicht es, die Anschlüsse 2, 3, 4, 5 und die Leitungen 9, 10 oder zumindest einen Abschnitt der Leitungen 9, 10 getrennt an einem Anhängefahrzeug 14 zu montieren. Nach der getrennten Montage der Anschlüsse 2, 3, 4, 5 und dem Verlegen der Leitungen 9, 10 können diese Elemente durch Verbinden des Ausgangsanschlusses 11 mit dem Anschlussmittel 23 verbunden werden. Die Leitungen 9, 10 können insbesondere vor dem Verlegen in einem Anhängefahrzeug zumindest streckenweise zu einem Kabelstrang 22 zusammengefasst sein.

Die Fig. 4 zeigt eine weitere Möglichkeit, die Leitungen 9, 10 zu einem Kabelstrang 22 zusammenzufassen. In diesem Ausführungsbeispiels sind die Leitungen stoffschlüssig mittels eines Klebemittels 20 zusammengefasst. Das Klebemittel 20 wird hier durch einen Kunststoff gebildet, mit dem die Leitungen 9, 10 abschnittsweise umspritzt sind. Eine der Leitungen, hier eine Leitung 9, weist mehrere Ankoppelmittel 21 auf zum Ankoppeln der mindestens einen Leitung 9 an anhängerseitige Komponenten. Die Ankoppelmittel 21 sind in diesem Ausführungsbeispiel Buchsen für eine Steckverbindung. Die Ankoppelmittel 21 sind direkt am Kabelstrang 22 angekoppelt. Derartige Ankoppelmittel 21 ermöglichen es, an einer oder mehreren Stellen des Kabelstranges 22 eine weitere Leitung anzuschließen. Vorteil ist, dass zum einen mehrere anhängerseitige Komponenten mit derselben Leitung verbunden werden können, aber auch, dass für einen Anschluss einer anhängerseitigen Komponente das Ankoppelmittel 21 ausgewählt werden kann, das sich an der für einen Anschluss geeigneten Position befindet. Letzteres ist insbesondere dann relevant, wenn sich die anzuschließenden anhängerseitigen Komponenten von Fall zu Fall an unterschiedlichen Positionen befinden. Alternativ, was ebenfalls in Fig. 4 gezeigt ist, kann eine Leitung, hier eine Leitung 10, auch ohne Unterbrechung aus dem Kunststoffmantel 20 herausgeführt werden, beispielsweise über eine Öffnung 24.

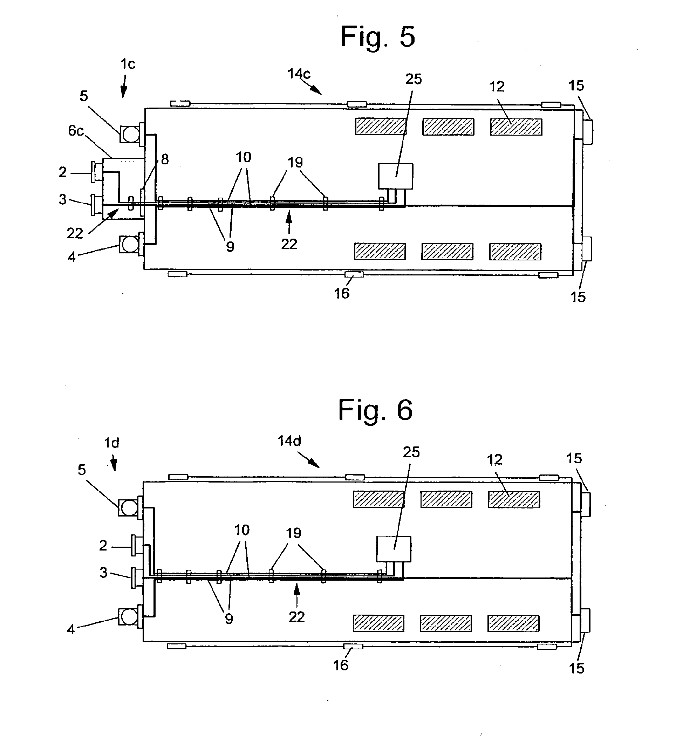

Fig. 5 zeigt eine zweite Ausführungsform eines Anhängefahrzeuges 14c mit einer dritten Ausführungsform einer Anschlussanordnung 1 c. Im Unterschied zu den vorherigen Ausführungsformen sind lediglich erster und zweiter elektrischer Anschluss 2, 3 an einem Gehäuse 6c angeordnet. Der erster und zweite pneumatische Anschluss 4, 5 ist direkt am Anhängefahrzeug 14c, hier an einem Unterbau des Anhängefahrzeuges 14c, montiert. Im Inneren des Gehäuses 6c sind die von den elektrischen Anschlüssen 2, 3 abgehenden Leitungen 9 mittels eines Haltemittels 19 zu einem Kabelstrang 22 zusammengefasst. Außerhalb des Gehäuses wird der Kabelstrang 22 durch ein weiteres Zusammenfassen mit den pneumatischen Leitungen 10, die von den pneumatischen Anschlüssen 4, 5 abgehen, erweitert.

Die Fig. 6 zeigt eine dritte Ausführungsform eines Anhängefahrzeuges 14d mit einer vierten Ausführungsform einer Anschlussanordnung 1d. In dieser Ausführungsform sind sowohl die elektrischen Anschlüsse 2, 3 als auch die pneumatischen Anschlüsse 4, 5 direkt mit dem Anhängefahrzeug 14d, hier mit einem Unterbau des Anhängefahrzeuges 14d, verbunden. Über Haltemittel 19 sind die von den jeweiligen Anschlüssen 2, 3, 4, 5 abgehenden Leitungen 9, 10 zu einem Kabelstrang 22 zusammengefasst.

Die Anschlussanordnung ist nicht auf die genannten Anschlüsse 2, 3, 4, 5 beschränkt. Es können weitere Anschlüsse vorgesehen sein, beispielsweise Anschlüsse, die andere Normen berücksichtigen, oder ein Anschluss für eine Stopplichtversorgung. Auch von solchen Anschlüssen ausgehende Leitungen wie auch beliebige andere Leitungen können in dem Kabelstrang aufgenommen werden.

## Patentansprüche

1. Anschlussanordnung (1a, 1 b, 1c, 1d) für ein Anhängefahrzeug (14a, 14c, 14d), umfassend folgende für einen zugfahrzeugseitigen Anschluss geeignete Anschlüsse (2, 3, 4, 5): a) ein erster elektrischer Anschluss (2) für ein Bremssystem (25), b) ein zweiter elektrischer Anschluss (3) für eine Beleuchtungsanlage, c) ein erster pneumatischer Anschluss (4) für eine Bremsleitung, d) ein zweiter pneumatischer Anschluss (5) für eine Vorratsleitung, sowie vier Leitungen (9, 10) zum Verbinden jeweils eines Anschlusses (2, 3, 4, 5) mit einer anhängerseitigen Komponente, **dadurch gekennzeichnet, daß** die vier Leitungen (9, 10) zumindest streckenweise zu einem gemeinsamen Kabelstrang (22) zusammengefasst sind.

2. Anschlussanordnung nach Anspruch 1, wobei die Leitungen (9, 10) mittels mindestens eines Haltemittels (19) zusammengefasst sind.

3. Anschlussanordnung nach Anspruch 2, wobei das Haltemittel (19) mindestens einen Kabelbinder, eine Schelle und/oder eine Umhüllung, beispielsweise einen Schlauch, umfasst.

4. Anschlussanordnung nach einem der vorhergehenden Ansprüche, wobei die Leitungen stoffschlüssig mittels eines Klebemittels (20) zusammengefasst sind.

5. Anschlussanordnung nach einem der vorhergehenden Ansprüche, wobei mindestens eine Leitung (9) ein oder mehrere Ankoppelmittel (21) aufweist zum Ankoppeln der mindestens einen Leitung (9) an anhängerseitige Komponenten, wobei das Ankoppelmittel (21) am Kabelstrang (22) angeordnet ist.

6. Anschlussanordnung nach einem der vorhergehenden Ansprüche, zusätzlich umfassend ein Gehäuse (6a, 6b, 6c), wobei die Anschlüsse (2, 3, 4, 5) am Gehäuse (6a, 6b, 6c) angeordnet sind und/oder von dem Gehäuse (6a, 6b, 6c) zumindest teilweise ausgebildet werden.

7. Anordnung nach einem der vorhergehenden Ansprüche, wobei das Gehäuse (6a, 6c) eine oder mehrere Durchführungen (8) aufweist, zur Durchführung der Leitungen (9, 10).

8. Anordnung nach Anspruch 6, wobei die Leitungen (9, 10) als Kabelstrang (22) durch die Durchführung (8) durchgeführt sind.

9. Anordnung nach einem der vorhergehenden Ansprüche, wobei das Gehäuse (6b) einen oder mehrere Ausgangsanschlüsse (11) für den anhängerfahrzeugseitigen Anschluss der Anschlussanordnung (1 b) aufweist.

10. Anordnung nach Anspruch 9, wobei die Leitungen als Kabelstrang (22) von dem Ausganganschluss (11) abgehen.

11. Anordnung nach einem der Ansprüche 7 bis 10, wobei die mindestens eine Durchführung (8) oder der mindestens eine Ausgangsanschluss (11) an einem Gehäusedeckel (13a, 13b) des Gehäuses (6a, 6b) angeordnet und/oder von diesem zumindest teilweise ausgebildet ist.

12. Anordnung nach einem der Ansprüche 6 bis 11, wobei die Leitungen (9, 10) außerhalb des Gehäuses (6a, 6b, 6c) oder außerhalb und innerhalb des Gehäuses (6a) zu einem Kabelstrang (22) zusammengefasst sind.

13. Anhängefahrzeug (14), umfassend eine Anschlussanordnung (1 a, 1 c, 1 d) nach einem der vorhergehenden Ansprüche.

## Claims

1. Connection arrangement (1a, 1b, 1c, 1d) for a trailer vehicle (14a, 14c, 14d), comprising the following connections (2, 3, 4, 5) which are suitable for a towing vehicle-end connection: a) a first electrical connection (2) for a brake system (25), b) a second electrical connection (3) for a lighting system, c) a first pneumatic connection (4) for a brake line, d) a second pneumatic connection (5) for a supply line, and four lines (9, 10) for connecting in each case one connection (2, 3, 4, 5) to a trailer-end component, **characterized in that** the four lines (9, 10) are combined, at least in sections, to form a common cable harness (22).

2. Connection arrangement according to Claim 1, wherein the lines (9, 10) are combined by means of at least one holding means (19).

3. Connection arrangement according to Claim 2, wherein the holding means (19) comprises at least a cable tie, a clip and/or a sheath, for example a hose.

4. Connection arrangement according to one of the preceding claims, wherein the lines are combined in a cohesive manner by means of an adhesive (20).

5. Connection arrangement according to one of the preceding claims, wherein at least one line (9) has one or more coupling means (21) for coupling the at least one line (9) to trailer-end components, wherein the coupling means (21) is arranged on the cable harness (22).

6. Connection arrangement according to one of the preceding claims, additionally comprising a housing (6a, 6b, 6c), wherein the connections (2, 3, 4, 5) are arranged on the housing (6a, 6b, 6c) and/or are at least partially formed by the housing (6a, 6b, 6c).

7. Arrangement according to one of the preceding claims, wherein the housing (6a, 6c) has one or more leadthroughs (8) for leading through the lines (9, 10).

8. Arrangement according to Claim 6, wherein the lines (9, 10) are led through the leadthrough (8) in the form of a cable harness (22).

9. Arrangement according to one of the preceding claims, wherein the housing (6b) has one or more output connections (11) for the trailer vehicle-end connection of the connection arrangement (1b).

10. Arrangement according to Claim 9, wherein the lines depart from the output connection (11) in the form of a cable harness (22).

11. Arrangement according to one of Claims 7 to 10, wherein the at least one leadthrough (8) or the at least one output connection (11) is arranged on a housing cover (13a, 13b) of the housing (6a, 6b) and/or is at least partially formed by said housing cover.

12. Arrangement according to one of Claims 6 to 11, wherein the lines (9, 10) are combined to form a cable harness (22) outside the housing (6a, 6b, 6c) or outside and inside the housing (6a).

13. Trailer vehicle (14), comprising a connection arrangement (1a, 1c, 1d) according to one of the preceding claims.

## Revendications

1. Agencement de raccord (1a, 1b, 1c, 1d) pour un véhicule tracté (14a, 14c, 14d), comprenant les raccords suivants (2, 3, 4, 5) appropriés pour un raccord du côté du véhicule tracteur : a) un premier raccord électrique (2) pour un système de freinage (25), b) un deuxième raccord électrique (3) pour une installation d'éclairage, c) un premier raccord pneumatique (4) pour une conduite de frein, d) un deuxième raccord pneumatique (5) pour une conduite de réserve, ainsi que quatre conduites (9, 10) pour relier à chaque fois un raccord (2, 3, 4, 5) à un composant du côté du véhicule tracté, **caractérisé en ce que** les quatre conduites (9, 10) sont réunies au moins en partie pour former un tronçon de câble commun (22).

2. Agencement de raccord selon la revendication 1, dans lequel les conduites (9, 10) sont réunies au moyen d'au moins un moyen de retenue (19).

3. Agencement de raccord selon la revendication 2, dans lequel le moyen de retenue (19) comprend au moins un serre-câble, un collier de serrage et/ou une gaine, par exemple un tuyau souple.

4. Agencement de raccord selon l'une quelconque des revendications précédentes, dans lequel les conduites sont réunies par liaison de matière au moyen d'un agent adhésif (20).

5. Agencement de raccord selon l'une quelconque des revendications précédentes, dans lequel au moins une conduite (9) présente un ou plusieurs moyens d'accouplement (21) pour l'accouplement de l'au moins une conduite (9) à des composants du côté du véhicule tracté, le moyen d'accouplement (21) étant disposé au niveau du tronçon de câble (22).

6. Agencement de raccord selon l'une quelconque des revendications précédentes, comprenant en outre un boîtier (6a, 6b, 6c), les raccords (2, 3, 4, 5) étant disposés au niveau du boîtier (6a, 6b, 6c) et/ou étant réalisés au moins en partie par le boîtier (6a, 6b, 6c).

7. Agencement selon l'une quelconque des revendications précédentes, dans lequel le boîtier (6a, 6c) présente un ou plusieurs passages (8) pour le passage des conduites (9, 10).

8. Agencement selon la revendication 6, dans lequel les conduites (9, 10) sont réalisées sous forme de tronçon de câble (22) traversant le passage (8).

9. Agencement selon l'une quelconque des revendications précédentes, dans lequel le boîtier (6b) présente un ou plusieurs raccords de sortie (11) pour le raccord de l'agencement de raccord (1b) du côté du véhicule tracté.

10. Agencement selon la revendication 9, dans lequel les conduites partent du raccord de sortie (11) sous forme de tronçon de câble (22).

11. Agencement selon l'une quelconque des revendications 7 à 10, dans lequel l'au moins un passage (8) ou l'au moins un raccord de sortie (11) est disposé au niveau d'un couvercle de boîtier (13a, 13b) du boîtier (6a, 6b) et/ou est réalisé au moins en partie par celui-ci.

12. Agencement selon l'une quelconque des revendications 6 à 11, dans lequel les conduites (9, 10) sont réunies à l'extérieur du boîtier (6a, 6b, 6c) ou à l'extérieur et à l'intérieur du boîtier (6a) pour former un tronçon de câble (22).

13. Véhicule tracté (14) comprenant un agencement de raccord (1a, 1c, 1d) selon l'une quelconque des revendications précédentes.
